# EUROPÄISCHE PATENTANMELDUNG

(11) **EP 2 290 736 A1**
(43) Veröffentlichungstag der Anmeldung: **02.03.2011**
(21) Anmeldenummer: 10009876.3
(22) Anmeldetag: 21.09.2004
(51) Int. Cl.: H01M 10/056

(54) **Elektrochemische Batteriezelle**

(30) Priorität: 23.09.2003 DE 10343862
(62) Teilanmeldung aus: 04786822.9
(71) Anmelder: Fortu Intellectual Property AG, 6060 Sarnen (CH)
(72) Erfinder: Zinck, Laurent, 67470 Mothern (FR); Borck, Markus, 70567 Stuttgart (DE); Biollaz, Heide, 79761 Waldshut (DE); Ripp, Christiane, 76327 Pfinztal (DE); Hambitzer, Günther, 53115 Bonn (DE)
(74) Vertreter: Durm & Partner

(57) **Zusammenfassung**

Elektrochemische Batteriezelle mit einer negativen Elektrode, einem ein Leitsalz enthaltenden Elektrolyt und einer positiven Elektrode, wobei der Elektrolyt auf SO₂ basiert und der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlussreaktionen stattfinden.

## Beschreibung

Die Erfindung betrifft eine elektrochemische Batteriezelle mit einer negativen Elektrode (Kathode), einem ein Leitsalz enthaltenden Elektrolyt und einer positiven Elektrode (Anode). Insbesondere richtet sich die Erfindung auf Alkalimetallzellen, bei denen die aktive Masse ein Alkalimetall ist, das beim Laden der Zelle in und/oder an der negativen Elektrode gespeichert wird. Die aktive Masse kann jedoch auch ein anderes Metall, insbesondere ein Erdalkalimetall oder ein Metall der zweiten Gruppe des Periodensystems sein. Das Leitsalz des Elektrolyten besteht aus Kationen des Metalls, das die aktive Masse bildet und geeigneten Anionen. Im Falle von Alkalimetallzellen wird als Leitsalz vorzugsweise ein Tetrahalogenoaluminat des Alkalimetalls, beispielweise LiAlCl₄, verwendet.

Nachfolgend wird beispielhaft überwiegend auf Alkalimetallzellen, insbesondere Lithiumzellen Bezug genommen. Dies darf jedoch nicht als Einschränkung der allgemeinen Anwendbarkeit der Erfindung verstanden werden.

Typisch für derartige Zellen ist ein Aufbau aus mehreren übereinander angeordneten Schichten, deren Flächenabmessungen sehr viel größer als ihre Dicke ist. Sie haben etwa gleich große Flächenabmessungen und sind in der Zelle sandwichartig übereinander angeordnet. Gebräuchlich sind prismatische Zellen mit in der Regel quaderförmigem Gehäuse und geraden Schichten sowie zylindrische Zellen, in deren Innerem die Schichten rollenförmig gewickelt sind.

Übliche Zellen haben mindestens drei Schichten, nämlich die negative Elektrode, die positive Elektrode und einen Separator, der beide Elektroden elektrisch und mechanisch trennt. Er hat schwierige Aufgaben zu erfüllen:
- Er soll die elektrische Trennung von positiver und negativer Elektrode sichern, ohne die der Betrieb einer Batteriezelle nicht möglich ist.
- Er soll dazu beitragen, eine gleichmäßige Verteilung des flüssigen Elektrolyten zwischen den Elektroden sicherzustellen.
- Er soll eine mechanische Trennung des Anoden- und des Kathodenraums gewährleisten, andererseits aber sowohl den erforderlichen Elektrolyttransport als auch einen Gastransport zwischen den beiden Teilräumen der Zelle gewährleisten.
- Er soll Kurzschlüsse zwischen den Elektroden zuverlässig verhindern. Ein besonderes Problem ergibt sich dabei, wenn beim Laden der Zelle das aktive Metall auf deren Oberfläche abgeschieden wird.

Das zuletzt genannte Problem ist besonders kritisch, wenn die aktive Masse, insbesondere nach mehreren Lade- und Entladezyklen, nicht als glatte Schicht mit einer ebenen Oberfläche abgeschieden wird, sondern als abschnittsweise fadenförmige Gebilde. Speziell im Fall von Alkalimetallzellen, insbesondere Lithiumzellen, werden beim Laden der Zelle unverzweigte Fäden mit (für eine bestimmte Zelle mit einem bestimmten Elektrolyten) im wesentlichen gleichem Durchmesser gebildet, die zu Knäueln durcheinanderwachsen und als Whisker bezeichnet werden. Die Bildung der Whisker wird darauf zurückgeführt, dass sich an der Oberfläche des reaktiven aktiven Metalls infolge einer Selbstentladereaktion eine dünne Deckschicht bildet, die nicht vollständig gleichmäßig ist. Deswegen wächst das elektrolytisch abgeschiedene aktive Metall bevorzugt an den dünneren Stellen durch die Deckschicht durch und dann jeweils am Ende des Fadens weiter.

Durch die Bildung solcher fadenförmiger Gebilde wird der Separator mechanisch stark belastet. Andererseits ist die Auswahl geeigneter Materialien durch weitere Anforderungen beschränkt:
- Das Separatormaterial muss in der Zelle inert sein;
- es muss möglichst dünn sein, um eine hohe Energiedichte zu ermöglichen;
- die Leistungsdaten der Zelle und ihre Lebensdauer werden u.a. durch die Durchlässigkeit des Separators für die Elektrolytionen mitbestimmt;
- die Kosten des Separators müssen vertretbar sein.

Besonders wichtig ist ein perfekt funktionierender Separator in Lithium-Ionen-Zellen und Lithium-Polymer-Zellen. Wenn dort Lithium metallisch auf der Oberfläche der negativen Elektrode abgeschieden wird, darf das hochreaktive Metall keinesfalls in Kontakt mit der positiven Elektrode kommen, weil der aus einem solchen Kontakt resultierende Kurzschluss sofort zu einer unkontrollierten Reaktionsfolge führen würde, die als "thermal runaway" bezeichnet wird. Die organische Elektrolytlösung solcher Zellen würde unkontrolliert abbrennen oder sogar explodieren. Wegen dieser Risiken werden die genannten Zelltypen in der Regel nur in relativ kleinen Bauformen hergestellt. Außerdem werden zusätzliche, vor allem elektronische, Sicherheitsmaßnahmen ergriffen.

Bei den genannten Zelltypen ist die negative Elektrode üblicherweise als sogenannte "Insertionselektrode" ausgebildet. Dieser Begriff bezeichnet generell Elektroden, die das aktive Metall derartig in ihrem Inneren enthalten, dass es zum Austausch mit dem Elektrolyt beim Laden und Entladen der Zelle bereit ist. Bei Lithium-lonen- und Lithium-Polymer- Zellen ist die negative Elektrode eine Insertionselektrode auf Basis von Graphit, in deren Inneres beim Laden der Zelle Metallionen des Leitsalzes aufgenommen werden. Die Zelle soll nach Möglichkeit so betrieben werden, dass Betriebszustände vermieden werden, bei denen aktives Metall an der Oberfläche der Elektrode abgeschieden wird. Dies ist in der Praxis jedoch nur mit aufwendigen elektronischen Maßnahmen zu erreichen, durch die ein Überladen der Zelle sowie ein Laden mit relativ hohen (über einem für die jeweilige Zelle gültigen Grenzwert liegenden) Stromstärken zuverlässig vermieden wird. Die Elektronik muss extrem genau (Abschaltspannung beispielsweise 4,2 V ± 0,01 V) und extrem zuverlässig (höchstens ein Fehler auf 100 Millionen Stück) sein. Durch derartige Maßnahmen werden die Kosten wesentlich erhöht. Dennoch verbleiben gewisse Risiken.

Auf dieser Grundlage liegt der vorliegenden Erfindung die Aufgabe zugrunde, eine wiederaufladbare elektrochemische Batteriezelle, insbesondere Alkalimetallzelle und vor allem Lithiumzelle zur Verfügung zu stellen, durch die ein möglichst hoher Sicherheitsstandard mit möglichst geringem Aufwand erreicht wird, wobei die vorteilhaften Eigenschaften des jeweiligen Zelltyps (im Falle von Lithiumzellen insbesondere deren unübertroffen hohe Energiedichte) in vollem Umfang erhalten bleiben oder sogar noch verbessert werden sollen.

Die Aufgabe wird gemäß einem ersten Hauptaspekt der Erfindung gelöst durch eine elektrochemische Batteriezelle mit einer negativen Elektrode, einem ein Leitsalz enthaltenden Elektrolyt und einer positiven Elektrode, wobei der Elektrolyt auf SO₂ basiert und der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlussreaktionen stattfinden.

Im Rahmen der Erfindung wurde experimentell festgestellt, dass in Batteriezellen, deren Elektrolyt auf SO₂ basiert, ein völlig unerwartetes Kurzschlussverhalten zu beobachten ist, wenn aktives Metall, das an der Oberfläche der negativen Elektrode abgeschieden wird, in Kontakt zu der positiven Elektrode kommt. Wenn man durch geeignete Maßnahmen dafür sorgt, dass derartige Kurzschlüsse lokal begrenzt sind, führen die dabei auftretenden Reaktionen weder zu einem "thermal runaway" noch laufen irreversible Reaktionen ab, durch die ein Teil des aktiven Metalls passiviert und dadurch die Ladekapazität der Zelle vermindert wird. Vielmehr wurde experimentell festgestellt, dass durch derartige lokal begrenzte Kurzschlüsse und die damit verbundenen Reaktionen die Eigenschaften der Zelle in keiner Weise negativ beeinflußt werden. Die erfindungsgemäße Zelle arbeitet demzufolge ohne Separator. Stattdessen ist sie so ausgebildet, dass lokale Kontakte von beim Laden der Zelle auf der negativen Elektrode abgeschiedener aktiver Masse mit der positiven Elektrode gezielt zugelassen wird. Dies stellt eine grundlegende Abkehr von bisher üblichen Zellkonstruktionen dar.

Wie erwähnt, gelten diese Beobachtungen für Zellen, deren Elektrolyt auf SO₂ basiert. Als "auf SO₂ basierend" (SO₂ based) werden Elektrolyten bezeichnet, die SO₂ nicht nur als Zusatz in geringer Konzentration enthalten, sondern bei denen die Beweglichkeit der Ionen des Leitsalzes, das in dem Elektrolyten enthalten ist und den Ladungstransport bewirkt, zumindest teilweise durch das SO₂ gewährleistet wird. Weitere Informationen hierzu können der WO 00/79631 und den darin zitierten Dokumenten entnommen werden.

Nach den Experimenten, die der Erfindung zugrunde liegen, führen die lokalen Kurzschlüsse und die damit verbundene Erwärmung des Elektrolyten zur Bildung von Verbindungen des aktiven Metalls mit dem SO₂, im Falle einer Lithiumzelle zur Bildung von Lithiumdithionit (Li₂S₂O₄). Obwohl diese Verbindung relativ schwer löslich ist, wird keines der bei der Reaktion verbrauchten Ausgangsprodukte (Li und SO₂) dauerhaft der Zellfunktion entzogen, weil der Bildung des Dithionits eine Auflösungsreaktion gegenübersteht, die hinreichend schnell ist, um zu einem für die Zellfunktion vorteilhaften Gleichgewicht zu kommen. Auch hierzu kann Näheres der WO 00/79631 entnommen werden.

Daneben kann im Bereich der lokalen Kurzschlüsse eine Reaktion mit der positiven Elektrode stattfinden. Dies gilt insbesondere für Zellen, bei denen die positive Elektrode ein Metalloxid, insbesondere ein Oxid eines Übergangsmetalls der Ordnungszahl 22 bis 28 enthält. Das Oxid liegt bevorzugt als Interkalationsverbindung aus dem aktiven Metall, einem der genannten Übergangsmetalle und Sauerstoff vor. Unter den genannten Metallen sind Kobalt, Nickel und Eisen besonders bevorzugt. Praktische Bedeutung haben insbesondere auch binäre und ternäre metalloxidische Interkalationsverbindungen, die zwei oder drei unterschiedliche Übergangsmetalle in der Gitterstruktur enthalten. Auch hinsichtlich dieser bei der vorliegenden Erfindung besonders bevorzugten Elektrodenmaterialien kann ergänzend auf die WO 00/79631 sowie auf das dort zitierte US-Patent 4,567,031 verwiesen werden. Beispielsweise bei Verwendung einer positiven Elektrode auf Basis von Kobaltoxid findet nach den Erkenntnissen der Erfinder infolge der lokalen Kurzschlüsse folgende Reaktion statt: CoO₂+Li→LiCoO₂

Diese Reaktion entspricht der Einlagerung des aktiven Metalls während des Entladens der Zelle.

Metallisches Lithium wird vor allem bei zwei Betriebszuständen an der negativen Elektrode derartig abgeschieden, dass es, wenn kein Separator vorhanden ist, die positive Elektrode kontaktieren kann, nämlich beim Laden mit besonders hohen Stromstärken oder beim Überladen, d.h. wenn die beim Laden zugeführte elektrische Ladungsmenge die Kapazität der negativen Elektrode übersteigt. In diesen Betriebszuständen ist eine Kurzschlussreaktion, die dem Entladen der Zelle entspricht, nicht nur nicht nachteilig, sondern sogar vorteilhaft. Die lokalen Kurzschlüsse wirken sich demzufolge sogar vorteilhaft aus und können als "benefitial shortcuts" bezeichnet werden.

Insgesamt wurde im Rahmen der experimentellen Erprobung der Erfindung festgestellt, dass mit der separatorlosen Zelle sehr gute Ergebnisse sowohl hinsichtlich der Sicherheit, als auch hinsichtlich der Zelldaten (Zykelstabilität, Kapazität etc.) erreicht werden.

Unter anderem werden folgende Vorteile erreicht:
- Der Innenwiderstand der Zelle wird verringert, weil der sehr feinporige und zum Verstopfen der Poren neigende Separator entfällt.
- Die Sicherheit wird wesentlich erhöht, weil die Risiken, die mit einer Beschädigung des Separators bei konventionellen Zellen verbunden sind, entfallen.
- Die Kosten werden reduziert, weil die gebräuchlichen Separatormaterialien einen erheblichen Kostenfaktor darstellen.
- Gewicht und Volumen der Zelle werden reduziert, so dass eine erhöhte Energie-und Leistungsdichte erreicht werden kann.
- Die Zelle kann mit hohen Stromstärken und deswegen schnell geladen werden, weil die mit der Abscheidung von aktivem Metall an der Zelloberfläche verbundenen Risiken beseitigt sind.
- Es können übliche Produktionsanlagen, wie sie beispielsweise für Lithium-Ionen-Zellen vorhanden sind, benutzt werden.

Erforderlich ist, dass durch geeignete Maßnahmen sichergestellt wird, dass die Kurzschlüsse und die Reaktionen, die aus der mit den Kurzschlüssen resultierenden Erhitzung verbundenen sind, lokal begrenzt sind.

Um dies zu erreichen, ist vorzugsweise eine poröse Isolatorschicht vorgesehen, die so angeordnet und ausgebildet ist, dass während des Ladens der Zelle an der negativen Elektrode abgeschiedene aktive Masse durch die Poren der Isolatorschicht bis an die Oberfläche der positiven Elektrode hindurchwachsen kann. Die poröse Isolatorschicht steht bevorzugt in unmittelbarem Kontakt zu der positiven Elektrode, wobei sich deren Oberflächen vollflächig berühren.

Die Poren der Isolatorschicht müssen groß genug sein, dass sie das gewünschte Hindurchwachsen der aktiven Masse bis an die Oberfläche der positiven Elektrode zulassen. Zugleich muss die Struktur und die Anordnung relativ zu der positiven Elektrode so ausgebildet sein, dass sich der Kontakt zwischen aktiver Masse und der positiven Elektrode auf lokale Teilbereiche der Elektrodenoberfläche beschränkt ist, so dass nur lokale Kurzschlüsse stattfinden, die keine Reaktion von weiterem Lithium (das sich in der porösen Isolatorschicht oder an anderen Teilen von deren Grenzfläche zu der negativen Elektrode befindet) nach sich ziehen. Würde ein lokaler Kurzschluss weitere Kurzschlüsse initiieren, so wäre durch die starke Temperaturerhöhung ein unkontrolliertes Abreagieren des Lithiums, d.h. ein "thermal runaway" zu erwarten.

Die im Einzelfall geeignete Struktur der porösen Isolatorschicht muss für die jeweilige Zellkonstruktion individuell festgelegt werden. Dabei ist zu berücksichtigen, dass der Durchmesser der beim Abscheiden des Lithiums gebildeten Whisker von Zelle zu Zelle verschieden ist. Besonders deutlich zeigt sich dies beim Vergleich von mit unterschiedlichen Elektrolyten arbeitenden Zellen. Bei Verwendung eines organischen Elektrolyten haben die Whisker generell erheblich größere Durchmesser als bei einem auf SO₂ basierenden Elektrolyten. Es kann deshalb durchaus sein, dass eine Schicht mit einer bestimmten Porosität bei einer ersten Zellkonstruktion das Hindurchwachsen von Whiskern verhindert und deswegen als Separator wirkt, während bei einer anderen Zelle die gleiche Schicht von der abgeschiedenen aktiven Masse durchdrungen wird.

Schon aus diesem Grund ist es praktisch unmöglich, Zahlenwerte oder andere quantitative Angaben über die Porengröße geeigneter Isolatorschichten zu machen. Hinzu kommt, dass übliche Angaben von Herstellern poröser Schichtmaterialien, wie beispielsweise "mittlere Porengröße" und "maximale Porengröße" im vorliegenden Fall zur Charakterisierung geeigneter Schichtmaterialien unbrauchbar sind, weil die Porengrößenverteilung von großer Bedeutung ist. Beispielsweise kann eine Schicht geeignet sein, die einen hohen Prozentsatz extrem feiner Poren hat, jedoch eine ausreichende Anzahl gröberer Poren aufweist, durch die die aktive Masse hindurchwachsen kann. Die Eignung eines Schichtmaterials zur Erfüllung der hier beschriebenen Funktion lässt sich jedoch experimentell problemlos prüfen, wie weiter unten noch näher beschrieben wird.

Die poröse Isolatorschicht kann beispielsweise als selbsttragende Folie, poröse Verbundstruktur aus Partikeln, Fasern oder Mikro-Rohrstücken mit einem Bindemittel oder auch als lose Schüttung ausgebildet sein. Es ist jedenfalls vorteilhaft, wenn die Schicht insgesamt gut benetzt wird, so dass die Elektrolytlösung leicht in die Schicht eindringt. Vorzugsweise enthält die poröse Isolatorschicht ein partikel-, faser- oder rohrförmiges Porenstrukturmaterial, das insbesondere aus Oxiden, Karbiden oder chemisch stabilen Silikaten gebildet sein kann. Als Bindemittel eignet sich besonders ein Terpolymer aus Tetrafluorethylen, Hexafluorpropylen und Vinyliden-Fluorid.

Die poröse Isolatorschicht muss nicht notwendigerweise eine gesonderte Schicht sein, die von anderen funktionalen Schichten der Zelle unterschieden werden kann. Dies gilt insbesondere für eine bevorzugte Ausführungsform der Erfindung, bei der die negative Elektrode ein flächiges, elektronisch leitendes Substrat, beispielsweise in Form eines Bleches, Schaums oder Gewebes aus Metall und eine mit dem Substrat verbundene nichtleitende Abscheideschicht aufweist, die derartig ausgebildet und angeordnet ist, dass an der Oberfläche des Substrats abgeschiedene aktive Masse in ihre Poren eindringt und dort weiter abgeschieden wird. Eine solche Konstruktion ist aus der WO 02/09213 bekannt, auf die insoweit Bezug genommen wird. Im Gegensatz zu der dort beschriebenen Zellkonstruktion ist erfindungsgemäß jedoch zwischen der Abscheideschicht und der positiven Elektrode keine für die aktive Masse undurchlässige Sperrschicht vorhanden. Die für die Lokalisierung der infolge des Fehlens der Sperrschicht unvermeidlich auftretenden Kurzschlüsse vorteilhafte poröse Isolatorschicht kann integraler (ununterscheidbarer) Bestandteil der Abscheideschicht sein oder durch eine gesonderte Schicht gebildet werden, die zwischen der Abscheideschicht und der positiven Elektrode verläuft und mit der Abscheideschicht lückenfrei und vollflächig verbunden sein sollte.

Generell hat sich die Erfindung insbesondere bei Zellkonstruktionen bewährt, bei denen die negative Elektrode so ausgebildet ist, dass beim Laden der Zelle positive Metallionen des Leitsalzes in ihrem Inneren aufgenommen werden. Bei derartigen Konstruktionen kommt es beim normalen Laden der Zelle zunächst nicht zu einer Abscheidung von aktivem Metall auf der Elektrodenoberfläche, sondern die Speicherung des aktiven Metalls während des Ladevorgangs findet im Inneren einer Struktur statt, die Bestandteil der negativen Elektrode ist. Zelltypen, für die diese Bedingung gilt, werden hier allgemein als "Insertionselektrode" bezeichnet. Als Insertionselektrode in diesem allgemeinen Sinne ist auch die vorstehend erläuterte Konstruktion mit einem flächigen, elektronisch leitendem Substrat und einer damit verbundenen Abscheideschicht, in deren Poren die aktive Masse beim Laden aufgenommen wird, anzusehen.

Gemäß einer weiteren Variante erfolgt die Aufnahme der positiven Metallionen in das Innere einer elektrisch leitfähigen Elektrodenmasse, die Bestandteil der negativen Elektrode ist. Ein wichtiges Beispiel einer solchen elektrisch leitfähigen Elektrodenmasse sind kohlenstoffhaltige Elektroden, insbesondere Graphitelektroden, wie sie auch für Lithium-lonen-Zellen verwendet werden. Dabei erfolgt die Speicherung des Lithiums während des Ladens nicht durch Ablagerung in porösen Hohlräumen, sondern durch Einlagerung in die Gitterstruktur der elektrisch leitfähigen Elektrodenmasse. Neben der erwähnten Graphitelektroden können als Beispiele solcher Elektrodenmaterialien Lithiuminterkalationselektroden auf Basis von Li₄Ti₅O₁₂ oder Legierungselektroden genannt werden.

Bei derartigen Zellkonstruktionen muss zwingend eine gesonderte poröse Isolatorschicht vorhanden sein, um einen unmittelbaren elektrischen Kontakt und damit Kurzschluss zwischen der negativen und der positiven Elektrode (d.h. deren jeweils leitfähigen Elektrodenmassen) zu verhindern. Eine solche Gestaltung wird nachfolgend anhand der Figuren noch näher erläutert.

Ein zweiter Hauptaspekt betrifft ein Herstellungsverfahren für eine elektrochemische Batteriezelle, insbesondere einen innerhalb eines solchen Verfahrens stattfindenden Reinigungsschritt, bei dem eine Elektrode der Zelle dadurch für ihre Funktion optimiert wird, dass an der Elektrode gebundene OH⁻-Ionen entfernt werden. Das Verfahren eignet sich insbesondere zur Herstellung einer Batteriezelle gemäß dem ersten Hauptaspekt der Erfindung, hat jedoch auch selbständige Bedeutung.

Gemäß dem zweiten Hauptaspekt werden die OH⁻-Ionen von der Elektrode entfernt, wobei ein Reinigungsmittel, das eine mit OH⁻-Ionen reagierende erste Reinigungskomponente enthält, derartig mit der Elektrode in Kontakt gebracht wird, dass an ihr gebundene OH⁻-Ionen durch Reaktion mit der ersten Reinigungskomponente von der Elektrodenoberfläche gelöst werden, und Bestandteile des Reinigungsmittels oder Reaktionsprodukte, die die Funktion der Zelle stören könnten, von der Elektrode entfernt werden.

Für die Funktion von wasserfreien Batteriezellen, also insbesondere auch Zellen, die mit einem auf SO₂ basierenden Elektrolyten arbeiten, ist es sehr wichtig, dass in der Elektrodenstruktur vorhandene Wasserreste (sowohl molekulares Wasser als auch H⁺- und OH⁻-Ionen) vollständig entfernt werden. Dies stellt insbesondere bei Verwendung der zuvor erläuterten Insertionselektroden ein schwerwiegendes Problem dar.

Im Rahmen der Erfindung wurde festgestellt, dass die Gegenwart von chemisch gebundenem Wasser zu einer Passivierung der Elektroden führen kann, so dass die Elektrodenprozesse nur gehemmt ablaufen. Im Falle einer Insertionselektrode, insbesondere einer Alkalimetall-Interkalationselektrode (z.B. des weiter oben erwähnten aus der WO 00/79631 bekannten Typs metalloxidischer Interkalationsverbindungen) betrifft dies die Auslagerung des Alkalimetalls beim Laden der Zelle bzw. die Einlagerung beim Entladen. Die Passivierung führt zu einer Erhöhung des Innenwiderstandes der Zelle.

Nach den Feststellungen der Erfinder lässt sich die Passivierung darauf zurückführen, dass eine Reaktion der Oberflächenmoleküle der Elektrode mit Wasser (z.B. aus Luftfeuchtigkeit) zur Bildung einer Deckschicht führt, die ein Hydroxid des aktiven Metalls, im Falle eines Alkalimetalls A also eine Verbindung des Typs AOH, enthält. Selbst geringe Spuren von Wasser führen zur Ausbildung einer Hydroxid-Deckschicht. Nach dem Kenntnisstand der Erfinder kann die Bildung einer Deckschicht schon beim Herstellen von Elektroden, deren aktive Masse auf einer metalloxidischen Interkalationsverbindung, insbesondere LiCoO₂, basiert, kaum vermieden werden. Dies bezieht sich nicht nur auf die äußere Oberfläche der Elektrode, sondern (im gebräuchlichen Fall eines porösen Elektrodenmaterials) auch auf deren innere Oberfläche (in den Poren). Die Passivierung der Elektrode läßt sich durch Reaktion mit der Reinigungskomponente, die mit OH⁻-Ionen reagiert und hier als erste Reinigungskomponente bezeichnet wird, beseitigen. Die erste Reinigungskomponente wird ohne Beschränkung der Allgemeinheit nachfolgend auch als Aktivierungskomponente bezeichnet.

Gegenstand des zweiten Hauptaspektes der Erfindung ist auch eine Insertionselektrode, insbesondere eine Interkalationselektrode, deren Oberfläche im wesentlichen frei von OH⁻-Ionen ist. Vorzugsweise ist die Elektrode auch im wesentlichen frei von H⁺-Ionen. Auch eine elektrochemische Zelle, die eine solche Elektrode enthält, ist Gegenstand der Erfindung. Dabei ist "im wesentlichen frei von OH⁻-Ionen bzw. H⁺-Ionen" dahingehend zu verstehen, dass die mit dem Vorhandensein der Ionen verbundene Passivierung der Elektrode bzw. der resultierende Kapazitätsverlust nicht in einem solchen Ausmaß vorhanden ist, dass die praktische Funktion der Elektrode in einer Batteriezelle beeinträchtigt wird. We weiter unten noch näher erläutert wird, führt die Passivierung zu einer kontinuierlichen Erhöhung des Innenwiderstandes der Zelle während der Lade- und Entladezyklen. Die diesbezüglichen Eigenschaften der Elektrode lassen sich beispielsweise mittels zyklischer Voltamogramme beobachten, wie ebenfalls weiter unten noch näher erläutert wird. Bevorzugt wird die Freiheit der Oberfläche der aktiven Masse von Hydroxid-Ionen durch das vorstehend beschriebene Verfahren mittels der ersten Reinigungskomponente erreicht.

Im Rahmen der Erfindung wurde festgestellt, dass Insertionselektroden der hier diskutierten Art einen Gehalt an chemisch gebundenem Wasser in der Größenordnung von 10000 ppm (d.h. 1 Gew% H₂O bezogen auf die elektrochemisch aktive Elektrodenmasse, insbesondere LiCoO₂) haben. Eine erfindungsgemäße optimierte Elektrode hat einen Wassergehalt von höchstens 5000 ppm, bevorzugt höchstens 1000 ppm, besonders bevorzugt höchstens 100 ppm und ganz besonders bevorzugt höchstens 10 ppm.

Als besonders geeignete erste Reinigungskomponente hat sich eine protonenfreie Lewis-Säure erwiesen. Mit diesem Begriff wird eine Substanz bezeichnet, die Säureeigenschaften im Sinne der von G.N. Lewis gegebenen Definition hat (also ein Elektronenakzeptor ist), jedoch kein H⁺-Ion enthält. Bevorzugte Beispiele von Lewis-Säuren sind AlF₃, BF₃, CO₂, CS₂ und GaCl₃. Generell läßt sich die Eignung einer Lewis-Säure für die Zwecke der Erfindung experimentell erproben.

Eine Vorauswahl geeigneter Lewis-Säuren kann aufgrund deren Stärke erfolgen, die wiederum von der Differenz der Elektronegativitätswerte der die Säure bildenden Atome (beispielsweise Al und F im Fall von AlF₃) abgeschätzt werden kann. Je größer diese Differenz ist, desto stärker ist die Lewis-Säure.

Das Reinigungsmittel ist in der Regel eine Flüssigkeit, die die erste Komponente in einem geeigneten Lösungsmittel enthält. Als Lösungsmittel sind insbesondere aprotische Flüssigkeiten, beispielsweise Tetrachlorkohlenstoff (CCl₄) geeignet. Die erforderliche Wasserfreiheit des Lösungsmittels kann beispielsweise mittels eines Molsiebs, insbesondere auf der Basis von Metallaluminosilikat mit großer Oberfläche, erreicht werden. Grundsätzlich kann als Lösungsmittel auch ein Gas oder überkritisches Fluid, insbesondere auf der Grundlage von überkritischem CO₂, verwendet werden. Die Reinigungskomponente kann auch selbst als Fluid (z.B. über kritisches CO₂) oder Gas (z.B. CS₂) vorliegen. In solchen Fällen muss das Reinigungsmittel selbstverständlich kein zusätzliches Lösungsmittel enthalten.

Die Konzentration der Aktivierungskomponente in dem Reinigungsmittel sollte möglichst hoch sein, wobei im Falle einer Lösung eine Obergrenze aus der Löslichkeit der Aktivierungskomponente resultiert. In der Regel ist eine gesättigte Lösung bevorzugt. Grundsätzlich ist eine Aktiverungswirkung jedoch auch schon bei geringeren Konzentrationen möglich. Die geeignete Konzentration muss im Einzelfall in Verbindung mit der Dauer der Reinigungsbehandlung experimentell bestimmt werden und hängt selbstverständlich auch von der verwendeten Lewis-Säure ab.

Das Reinigungsmittel muss in der Praxis folgende Bedingungen erfüllen:
- Sofern das Verfahren derartig angelegt ist, dass mindestens ein Teil des Reinigungsmittels bei der Herstellung der Zelle in der Insertionselektrode verbleibt, muss das Reinigungsmittel insoweit für die Funktion der Zelle unschädlich sein. Schädliche Bestandteile müssen sich leicht und vollständig entfernen lassen.
- Das Reinigungsmittel muss mit dem Elektrodenmaterial verträglich sein. Insbesondere darf es keine dessen Funktion störende Reaktion verursachen.

Gemäß einer bevorzugten Ausführungsform wird zur Optimierung von Insertionselektroden in dem Herstellungsverfahren eine zweite Reinigungskomponente verwendet, die mit H⁺-Ionen reagiert und in einem Reinigungsmittel derartig mit der Insertionselektrode in Kontakt gebracht wird, dass in ihr gebundene H⁺-Ionen durch Reaktion mit der zweiten Reinigungskomponente aus dem Inneren der Elektrode gelöst werden. Im Rahmen der Erfindung wurde festgestellt, dass die Eigenschaften von Insertionselektroden, insbesondere Interkalationselektroden der weiter oben erläuterten Art, auch dadurch beeinträchtigt werden, dass H⁺-Ionen (Protonen) an das Elektrodenmaterial binden. Die Protonen tauschen mit den Alkalimetallionen der Insertionselektrode aus, reduzieren dadurch deren Aufnahmefähigkeit für aktives Metall (insbesondere Alkalimetall) und damit die elektrische Kapazität der Zelle. Mittels der zweiten Reinigungskomponente werden die Protonen aus der Insertionselektrode extrahiert. Dadurch wird ihre Aufnahmekapazität und damit auch die elektrische Speicherkapazität der Zelle verbessert.

Als zweite Reinigungskomponente eignet sich insbesondere ein Salz, das mit den in der Insertionselektrode gebundenen Protonen eine Ionenaustauschreaktion eingeht. Geeignete Beispiele sind Halogenide, insbesondere Fluoride eines Alkalimetalls, Erdalkalimetalls oder eines Metalls der dritten Hauptgruppe des Periodensystems. Ohne Beschränkung der Allgemeinheit wird nachfolgend für die zweite Reinigungskomponente auch die Bezeichnung "Reinigungssalz" verwendet.

Hinsichtlich beider Reinigungskomponenten und deren Verwendung in dem Herstellungsverfahren sind verschiedene Varianten möglich. Beispielsweise kann mindestens eine Teilmenge des Reinigungssalzes schon bei der Herstellung der Elektrodenmasse in diese und damit in die Elektrode eingebracht werden. Es kann auch mit einer Verfahrensführung gearbeitet werden, bei der die erste und/oder die zweite Reinigungskomponente nicht unmittelbar in das Reinigungsmittel eingebracht wird. Vielmehr besteht selbstverständlich auch die Möglichkeit, dass diese Komponenten in situ mittels geeigneter Vorreaktionen gebildet werden. Beispielhaft genannt seien Salze, die ein Reinigungssalz dadurch bilden können, dass sie Halogenide, bevorzugt Fluoride abspalten, insbesondere Salze der Anionen PF₆⁻, AsF₆⁻, BF₄⁻ und AlF4⁻. Auch organische Salze können sich als Ausgangsprodukte zur in situ-Bildung eines Reinigungssalzes eignen.

Gemäß einer bevorzugten Ausgestaltung dieses Herstellungsverfahrens erfolgt die Entfernung der OH- und H⁺-Ionen zweistufig in zwei getrennten Schritten, bei denen jeweils ein getrenntes (vorzugsweise auch unterschiedliches) Lösungsmittel eingesetzt wird.

Insbesondere kann in einer ersten Stufe die Insertionselektrode mit einem Reinigungsmittel kontaktiert werden, das eine protonenfreie Lewis-Säure in einem leicht flüchtigen aprotischen Lösungsmittel, beispielsweise CCI₄ enthält. Dieses Reinigungsmittel wird so lange einwirken gelassen, bis die OH⁻-Ionen von der Elektrode in das Reinigungsmittel übergegangen sind. Danach wird es entfernt.

In einer zweiten Stufe wird die Elektrode mit einem zweiten Reinigungsmittel in Kontakt gebracht, das die zweite Reinigungskomponente enthält. Nach Ablauf der für den Übergang der Protonen aus der Elektrode in das Reinigungmsittel erforderlichen Reaktion kann auch das zweite Reinigungsmittel wieder entfernt werden. Die resultierende optimierte Elektrode muss selbstverständlich in wasserfreier Atmosphäre weiterverarbeitet werden, damit ihre Eigenschaften nicht erneut durch Aufnahme von Wasser und dessen Bestandteilen OH- und H⁺ verschlechtert werden.

Grundsätzlich kann als Lösungsmittel einer Reinigungsflüssigkeit auch der für die jeweilige Zelle vorgesehene Elektrolyt verwendet werden. Insbesondere kann es zweckmäßig sein, ein geeignetes Reinigungssalz zusammen mit dem Elektrolyt in die Zelle einzubringen. Da die durch Ionenaustausch mit den in der Insertionselektrode enthaltenen Protonen gebildeten Verbindungen, beispielsweise HF und HCl, flüchtig sind, entweichen sie von selbst, wobei man dies durch Anwendung von Unterdruck (Evakuieren) beschleunigen kann. In einem solchen Fall muss die Reinigungsflüssigkeit nicht aus der Zelle entfernt werden, sondern bleibt darin als Elektrolyt, wobei verbliebene Reste des Reinigungssalzes weitere positive Wirkungen (neben der Extraktion der H⁺-Ionen aus der Elektrode) haben.

Die Behandlung der Elektroden mit den Reinigungsmitteln kann grundsätzlich sowohl innerhalb als auch außerhalb der Zelle erfolgen. Im Falle des zweistufigen Verfahrens kann es insbesondere zweckmäßig sein, die erste Verfahrensstufe (Entfernen der OH⁻-Ionen) außerhalb der Zelle durchzuführen, danach die teilweise optimierte Elektrode in die Zelle einzubauen und die zweite Reinigungsstufe (Extraktion der H⁺-Ionen) in der Zelle durchzuführen.

Ein dritter Hauptaspekt der Erfindung betrifft das Befüllen der Zelle mit der Elektrolytlösung. In der DE 19911800 C1 ist ein Verfahren und eine Vorrichtung zum Befüllen einer elektrochemischen Zelle beschrieben, mit dem die besonderen Probleme gelöst werden sollen, die beispielsweise mit auf SO₂-basierenden Elektrolyten verbunden sind. Derartige Elektrolyten stellen solvatisierte Salze dar, deren Lösungsmittel (SO₂) bei Raumtemperatur gasförmig ist. Zur Überwindung der damit verbundenen besonderen Probleme wird eine komplizierte Apparatur vorgeschlagen, bei der eine Kanüle gasdicht durch die Einlassöffnung der Batterie bis an den Elektrodenstapel herangeführt werden muss. Dadurch besteht die Gefahr, dass das Kanülenende den Elektrodenstapel beschädigt und einen internen Kurzschluß verursacht. Außerdem kann eine solche dünne Kanüle leicht durch auskristallisiertes Leitsalz verstopft werden. Zum Befüllen wird die Zelle evakuiert und nach Umlegen eines Ventils wird die Elektrolytlösung in die Zelle gesaugt. Dabei ist der große Druckunterschied zwischen Elektrolytlösung und Zellinnerem nachteilig. Das Lösungsmittel (SO₂) wird zu Beginn aus der Elektrolytlösung verdampft. Dadurch wird die Gefahr der Auskristallisation des Leitsalzes und damit einer Verstopfung der Befülleinrichtung zusätzlich erhöht.

Demgegenüber wird im Rahmen der Erfindung ein wesentlich einfacheres Verfahren vorgeschlagen, das bevorzugt in Verbindung mit den beiden anderen Hauptaspekten verwendet wird, aber auch selbständige Bedeutung hat. Dabei schließt das Einfüllen der Elektrolytlösung folgende Teilschritte ein:
- Der Innenraum des Gehäuses wird mit gasförmigem SO₂ gefüllt;
- eine Einfüllöffnung des Gehäuses wird gasdicht an ein Gefäß angeschlossen, das die Elektrolytlösung mit einem Anteil an SO₂ enthält, der so bemessen ist, dass das gasförmige SO₂ in der Elektrolytlösung begierig gelöst wird; und
- die Elektrolytlösung wird, getrieben durch den aus dem Lösungsvorgang resultierenden Unterdruck, in das Gehäuse einströmen gelassen.

Nähere Erläuterungen werden weiter unten auf Basis der Figuren gegeben. Das Verfahren ermöglicht auf einfache Weise eine vollständige Befüllung der Zelle mit einem auf SO₂ basierenden Elektrolyt.

Gemäß einem vierten Hauptaspekt befasst sich die Erfindung mit einem Problem, das daraus resultiert, dass sich auf der negativen Elektrode, insbesondere bei Zellen mit einem auf SO₂ basierenden Elektrolyten, aufgrund elektrochemischer Gegebenheiten beim ersten Laden der Zelle eine Deckschicht bildet. Im Rahmen der Erfindung wurde festgestellt, dass diese Deckschichtbildung die Ursache einer erheblichen Minderung der Entladekapazität der Zelle ist und eine diesbezügliche Optimierung dadurch erreicht werden kann, dass für die Bildung der Deckschicht erforderliches aktives Metall aus einem Zusatzvorrat zu einer der Elektroden übertragen wird, wobei
- der Zusatzvorrat in Kontakt mit der Elektrolytlösung steht,
- eine Hilfselektrode in elektrisch leitendem Kontakt zu der Elektrolytlösung steht,
- eine elektrische Leitungsverbindung zwischen der Hilfselektrode und der Elektrode, zu der das aktive Metall übertragen werden soll, hergestellt wird und
- die Übertragung des aktiven Metalls dadurch bewirkt wird, dass ein elektrischer Strom zwischen der Hilfselektrode und der Elektrode, zu der es übertragen wird, fließt.

Auch dieser Hauptaspekt wird nachfolgend - ohne Beschränkung der Allgemeinheit - anhand von Zellen erläutert, deren aktives Metall ein Alkalimetall ist. Dabei besteht die Deckschicht aus Alkalimetalldithionit (A₂S₂O₄), im Falle einer Lithiumzelle also aus Li₂S₂O₄. Die Deckschichtbildung erfolgt aufgrund von elektrochemischen Bedingungen, die sich vereinfacht dahingehend beschreiben lassen, dass die Reaktion, die zur Bildung der Deckschicht führt, bereits bei einer Spannung (im Fall einer Li-Zelle ab 3 Volt vs. Li/Li⁺) stattfindet, die niedriger ist als die normale Betriebsspannung der Zelle. Deshalb wird zunächst bevorzugt das Dithionit gebildet, bevor metallisches Alkalimetall auf bzw. in der negativen Elektrode gespeichert und damit die Zelle geladen wird.

Das Lithium (hier wieder beispielhaft genannt auch für andere Alkalimetalle) für die Bildung des Li₂S₂O₄ stammt normalerweise aus der positiven Elektrode. Dies hat zur Folge, dass bereits beim ersten Ladezyklus ein Teil des eigentlich für die Zellkapazität benötigten Lithiums verbraucht wird. Dieses Problem ist besonders schwerwiegend, wenn die aktive Masse der negativen Elektrode stark porös ist und folglich eine große innere Oberfläche hat. Dadurch entsteht eine entsprechend große Deckschichtfläche und ein hoher Anteil des vor Beginn des Ladevorganges in der positiven Elektrode enthaltenen Lithiums (beispielsweise etwa 25 %) wird beim ersten Ladevorgang für die Deckschichtbildung verbraucht. In besonderem Maß besteht dieses Problem, wenn die negative Elektrode eine Insertionselektrode, vor allem auf Basis von Graphit, ist.

Verschiedene Ausführungsformen des vierten Hauptaspektes unterscheiden sich hinsichtlich der Quelle des zusätzlichen aktiven Metalls, der verwendeten Hilfselektrode sowie hinsichtlich der Elektrode, die das Ziel der Übertragung des zusätzlichen aktiven Metalls (nachfolgend "Zielelektrode") ist.

Der Zusatzvorrat des aktiven Metalls kann insbesondere in folgenden Varianten eingesetzt werden, die grundsätzlich auch in Kombination miteinander verwendet werden können:
- Das aktive Metall kann als reines (d.h. nicht chemisch gebundenes) Metall (zweckmäßigerweise durch Eintauchen) in Kontakt mit dem Elektrolyt gebracht werden.
- Eine zusätzliche Menge an Elektrolyt kann, in einem Behältnis außerhalb des Gehäuses der Zelle oder in der Zelle selbst, bereitgehalten werden. Im erstgenannten Fall ist der zusätzliche Elektrolyt über eine (den Ionentransport ermöglichende) Elektrolytbrücke mit dem Elektrolyt in der Zelle verbunden.
- Das zusätzliche aktive Metall kann in Form einer geeigneten Verbindung, im Falle eines Alkalimetalls A vorzugsweise als dessen Dithionit A₂S₂O₄, eingesetzt werden:

Die Hilfselektrode kann grundsätzlich von einem leitenden Element gebildet werden, das zusätzlich zu den für den Betrieb der Zelle erforderlichen Bauteilen in die Elektrolytlösung eintaucht. Bevorzugt wird jedoch das Gehäuse der Zelle selbst, genauer gesagt mindestens ein elektrisch leitender Teil von dessen Innenwand, als Hilfselektrode verwendet. Wenn die Quelle des zusätzlichen Metalls metallisch leitet, kann sie auch selbst die Hilfselektrode bilden.

Zielelektrode kann sowohl die negative als auch die positive Elektrode der Zelle sein.
- Die Übertragung des aktiven Metalls aus dem Zusatzvorrat auf die negative Elektrode sollte nach dem Einfüllen des Elektrolyts, jedoch vor dem ersten Laden der Zelle, stattfinden und so lange fortgesetzt werden, bis sich dabei auf der Oberfläche der Elektrode eine Deckschicht in etwa der gleichen Menge gebildet hat wie beim normalen Laden der Zelle (bevor metallisches Alkalimetall auf bzw. in der negativen Elektrode gespeichert wird).
- Im Falle der positiven Elektrode geht es darum, durch die zusätzliche Zuführung des Alkalimetalls den Verlust zu ersetzen, der in der positiven Elektrode als Resultat der Deckschichtbildung bei einem vorausgehenden Ladevorgang eingetreten ist. In diesem Fall bildet man nach dem Einfüllen des Elektrolyts durch Laden der Zelle die Deckschicht auf der negativen Elektrode, wobei dieser Ladevorgang bevorzugt so lange fortgesetzt werden sollte, bis metallisches Alkalimetall auf bzw. in der negativen Elektrode gespeichert und damit die Zelle geladen wird. Danach erfolgt die Zuführung des aktiven Metalls zu der positiven Elektrode und damit der Ersatz des daraus bei dem Ladevorgang entnommenen Alkalimetalls.

Die Erfindung wird nachfolgend anhand der Figuren näher erläutert. Die dargestellten und beschriebenen Besonderheiten können einzel oder in Kombination verwendet werden, um bevorzugte Ausgestaltungen der Erfindung zu schaffen. Es zeigen:
- Fig. 1: einen schematischen Querschnitt durch eine erfindungsgemäße Batteriezelle;
- Fig. 2: eine perspektivische Prinzipdarstellung zur Erläuterung der Anordnung und der Größenverhältnisse der Elektrodenmassen bei einer beispielhaften Ausführungsform der Erfindung;
- Fig. 3: eine perspektivische Prinzipdarstellung zur Erläuterung eines Verfahrens zur experimentellen Auswahl eines geeigneten Materials für eine poröse Isolatorschicht;
- Fig. 4: eine graphische Darstellung von Meßergebnissen aus der experimentellen Erprobung des ersten Hauptaspekts der Erfindung;
- Fig. 5 und Fig. 6: zyklische Voltamogramme aus der experimentellen Erprobung des zweiten Hauptaspekts der Erfindung;
- Fig. 7: eine zusammenfassende Darstellung von aufgrund von zyklischen Voltamogrammen gemäß den Figuren 5 und 6 gewonnenen Ergebnissen;
- Fig. 8: eine graphische Darstellung der Entladekapazität von Zellen in Abhängigkeit von der Zahl der Lade- und Entladezyklen;
- Fig. 9: eine Prinzipskizze zur Erläuterung des dritten Hauptaspekts der Erfindung;
- Fig. 10: eine Prinzipskizze zur Erläuterung einer ersten Variante des vierten Hauptaspekts der Erfindung;
- Fig. 11: eine Prinzipskizze zur Erläuterung einer zweiten Variante des vierten Hauptaspekts der Erfindung;
- Fig. 12: eine Prinzipskizze in einer Teil-Schnittdarstellung zur Erläuterung einer dritten Variante des vierten Hauptaspekts der Erfindung.

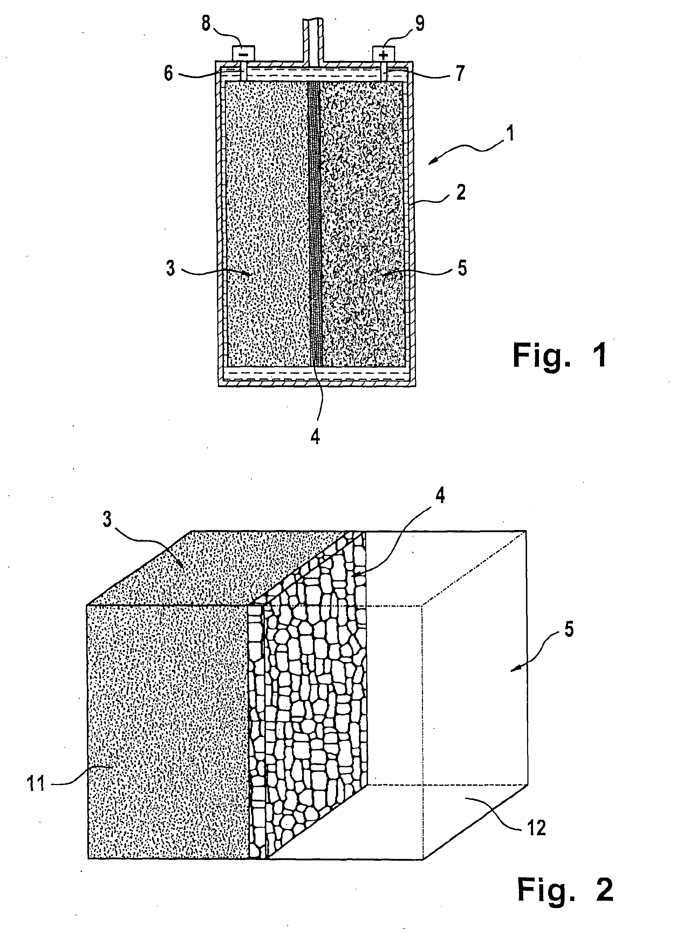

Figur 1 zeigt schematisch eine elektrochemische Batteriezelle 1 mit einem Gehäuse 2, in deren Innenraum sich eine Sandwich-Anordnung von Schichten befindet, nämlich eine negative Elektrode 3, eine poröse Isolationsschicht 4 und eine positive Elektrode 5. Die Elektroden 3,5 sind über elektrische Ableiter 6,7 mit Anschlusskontakten 8,9 verbunden, über die die Zelle zum Laden mit einem Ladegerät bzw. bei der Verwendung mit einem Stromverbraucher verbunden werden kann.

Die Konstruktion der Zelle ist weitgehend konventionell und muss nicht näher erläutert werden. Eine wichtige Besonderheit besteht darin, dass zwischen den Elektroden 3,5 kein Separator, sondern eine poröse Isolatorschicht 4 vorhanden ist, die das Durchwachsen von aktivem Metall, das beim Laden der Zelle an der der positiven Elektrode 5 zugewandten Oberfläche der negativen Elektrode abgeschieden wird, durch die Isolatorschicht 4 hindurch begünstigt. Dabei kommt es zu lokalen Kontakten zwischen dem aktiven Metall und der der negativen Elektrode 3 zugewandten Oberfläche der positiven Elektrode 5 und infolgedessen finden lokale Kurzschlüsse statt.

Figur 1 und noch deutlicher Figur 2 zeigen, dass die Elektroden 3,5 vorzugsweise sehr viel dicker als die Isolatorschicht 4 sind. Die Isolatorschicht 4 hat bevorzugt eine Dicke von maximal 100 µm, während die Elektroden eine Dicke von typischerweise etwa 0,1 mm bis 2 mm haben. Diese Zahlenwerte zeigen, dass die Darstellung in den Figuren zwar hinsichtlich der Dickenrelationen etwa maßstäblich ist, nicht jedoch hinsichtlich der absoluten Dicke der Schichten. Vielmehr enthält eine kommerzielle Batterie in der Regel ein Paket aus einer Mehrzahl dünner Schichten. Insoweit unterscheidet sich die Erfindung, abgesehen von den hier erläuterten Besonderheiten, nicht von üblichen Batterien.

Die relativ große Dicke der Elektroden 3 und 5 hängt damit zusammen, dass bei der dargestellten bevorzugten Ausführungsform beide Elektroden eine elektrisch leitfähige Elektrodenmasse 11 bzw. 12 aufweisen, in die die Ionen des aktiven Metalls beim Laden bzw. Entladen der Zelle aufgenommen werden. Geeignete Materialien wurden bereits genannt. Besonders bevorzugt ist die negative Elektrode 3 eine Graphitelektrode, wobei ihre (bevorzugt poröse) Elektrodenmasse 11 weitgehend aus Kohlenstoff besteht. Die positive Elektrode ist bevorzugt eine Interkalationselektrode, deren Elektrodenmasse 12 aus Lithiumkobaltoxid gebildet ist und bevorzugt ebenfalls eine poröse Struktur hat. Im entladenen Zustand ist das Lithium im Inneren der positiven Elektrode gespeichert. Beim Laden wandern Lithiumionen durch die poröse Isolatorschicht 4 in die Elektrodenmasse 11 der negativen Elektrode. Bei bestimmten Betriebszuständen findet, wie weiter oben erläutert, darüber hinaus eine Abscheidung des aktiven Metalls an der Grenzfläche zwischen der Elektrodenmasse 11 und der porösen Isolatorschicht 4 statt. Dabei dringt das aktive Metall in die Poren der Isolatorschicht 4 ein und wächst durch die poröse Isolatorschicht 4 hindurch schließlich bis an die Grenzfläche zwischen der positiven Elektrode 5 und der Isolatorschicht 4, wo die erläuterten lokalen Kurzschlüsse stattfinden.

In den Figuren 1 und 2 nicht dargestellt ist die erforderliche elektrische Verbindung zwischen den Elektrodenmassen 11,12 und den Abteitern 6,7. Sie wird durch metallene Ableitelemente gewährleistet, die in üblicher Weise mit den Elektrodenmassen 11,12 verbunden sein können. In Frage kommen beispielsweise dünne Ableitbleche auf der von dem porösen Isolator 4 abgewandten Oberfläche der Elektrodenmassen 11 und 12, aber auch poröse Metallstrukturen, beispielsweise in Form von Metallschäumen, in die die Elektrodenmasse partiell oder vollständig eingearbeitet ist. Auch insofern ist keine nähere Erläuterung erforderlich, weil derartige Konstruktionen aus dem Stand der Technik bekannt sind.

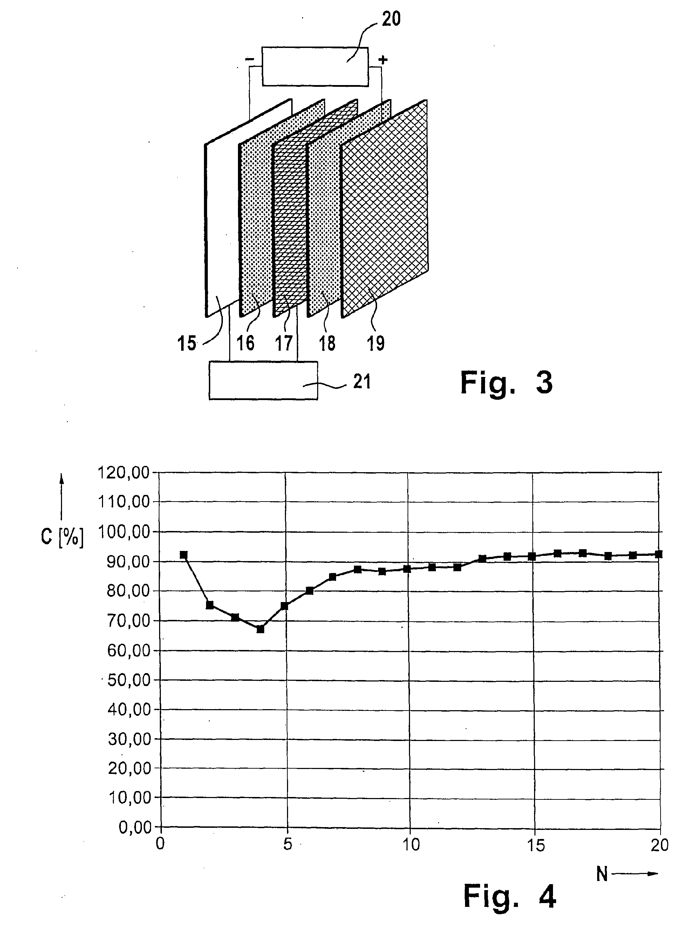

Wie weiter oben erläutert wurde, können die Konstruktionsmerkmale der porösen Isolatorschicht 4, durch die die im Rahmen der Erfindung erforderlichen Eigenschaften (Durchlässigkeit für an der negativen Elektrode abgeschiedene aktive Masse, aber Sicherstellung von lokal begrenzten Kurzschlüssen) erreicht werden, nicht in allgemein verbindlichen Werten (beispielsweise hinsichtlich der Porösität und der Strukturbestandteile) angegeben werden. Die Eignung eines für die Isolatorschicht vorgesehenen Materials für eine bestimmte Zelle lässt sich jedoch experimentell leicht prüfen. Ein geeigneter Experimentalaufbau ist in Figur 3 stark schematisiert dargestellt. Er besteht aus folgender Schichtenfolge:

Negative Elektrode 15 aus Ni-Metall; geeignet ist sowohl eine Metallfolie als auch ein Schaum- oder Streckmetall aus Nickel.

Testmaterial 16: auf seine Eignung für die Isolatorschicht 4 zu untersuchendes Material

Hilfselektrode 17 aus Ni-Metall; sie muss flüssigkeitsdurchlässig sein und kann beispielsweise aus Streckmetall oder perforiertem Blech bestehen.

Separator 18: Geeignet ist ein übliches Separatormaterial; in dem Experimentalaufbau kommt es nur auf dessen elektrisch isolierende Eigenschaften bei gleichzeitiger Durchlässigkeit für den Elektrolyt an.

Positive Elektrode 19: LiCoO₂ in Ni-Schaum

Die Schichten werden aufeinander gestapelt und mittels eines nicht dargestellten Rahmens zusammengepresst. Der gesamte Aufbau wird in eine auf SO₂ basierende Elektrolytlösung getaucht, deren Zusammensetzung der Elektrolytlösung der geplanten Zelle entspricht.

Die dargestellte Experimentalzelle wird mittels eines Ladegerätes 20 geladen, wobei (wie zuvor für die Zelle der Figuren 1 und 2 beschrieben) Lithium aus der positiven Elektrode 19 ausgelagert wird und sich in der negativen Elektrode abscheidet. Während des Ladevorgangs wird die Potentialdifferenz zwischen der negativen Elektrode und der Hilfselektrode mittels eines Spannungsmessgerätes 21 überwacht. Sie beträgt normalerweise 3,3 Volt (Spannung eines Li-Ni-Elementes). Wenn Lithium durch die Isolatorschicht 16 zu der Hilfselektrode 17 durchwächst, führt dies zu einer Verringerung der Potentialdifferenz. Zu diesem Zeitpunkt wird die Messung beendet und die Experimentalzelle auseinandergebaut. durch optische Untersuchung der Isolatorschicht (auf der der Hilfselektrode 17 zugewandten Seite) kann die Art des Lithiumwachstums festgestellt werden. Die Stellen, an denen das Lithium durchgewachsen ist, sowie die eventuellen Ansammlungen von Lithium, sind gut zu erkennen. Somit lässt sich feststellen, ob das Lithium wie gewünscht die zu untersuchende Schicht 16 nur an lokal begrenzten Stellen durchdringt und sich demzufolge als poröse Isolatorschicht für die Erfindung eignet.

Figur 4 zeigt Ergebnisse der experimentellen Erprobung einer erfindungsgemäßen separatorlosen Messzelle. Im konkreten Fall hatte die Zelle eine positive Elektrode aus LiCoO₂ und eine negative Elektrode mit unmittelbarer Abscheidung von metallischem Lithium in eine poröse Struktur aus Siliciumcarbid, die in unmittelbarem Kontakt zu der Elektrodenmasse der positiven Elektrode stand. Als Elektrolyt wurde LiAlCl₄ x 1,5 SO₂ verwendet.

Aufgetragen ist die Kapazität C der Zelle in Prozent der Nennkapazität gegenüber der Zahl N der Lade- und Entladezyklen. Nach einem anfänglichen Kapazitätsverlust durch strukturelle Inhomogenitäten der negativen Elektrode stabilisierte sich die Kapazität auf 90 %. Dies zeigt die Funktionstüchtigkeit der separatorlosen Konstruktion.

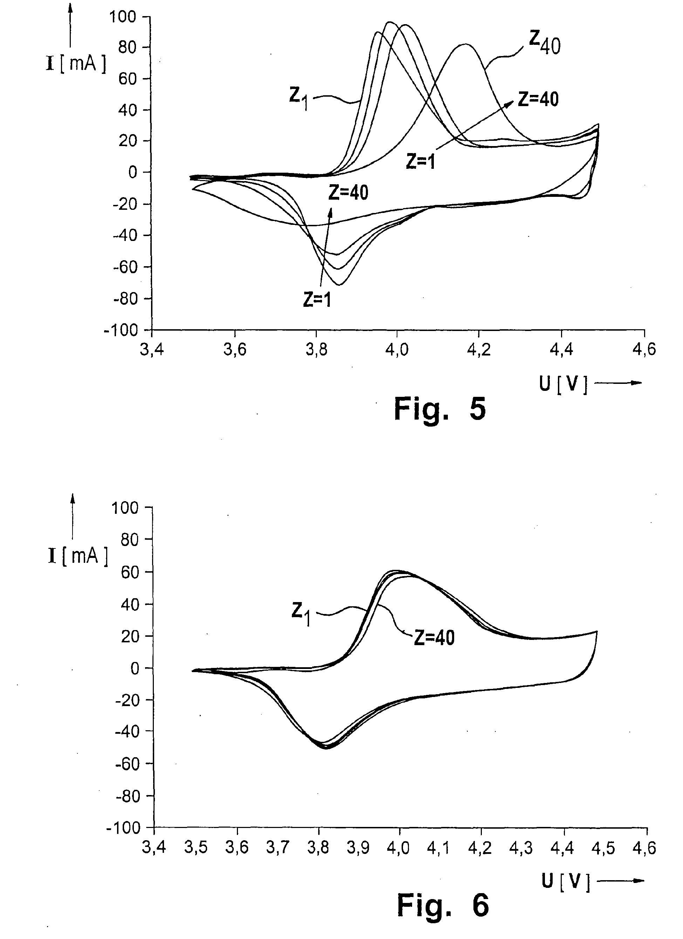

Die Figuren 5 bis 8 zeigen Ergebnisse, die bei der experimentellen Erprobung des zweiten Hauptaspekts der Erfindung gewonnen wurden. Dabei wurden positive Elektroden, die erfindungsgemäß optimiert worden waren, mit nicht optimierten Elektroden verglichen. Der Versuchsaufbau hatte folgende Merkmale:
Geometrische Elektrodenfläche: 1 cm²
Elektrodenkapazität: 40 mAh
Elektrolytlösung: LiAlCl₄ x 1,5 SO₂
Elektrodenmaterial: LiCoO₂

In einer gebräuchlichen Experimentalzelle ("E-Zelle" mit Referenzelektrode zur stromlosen Messung des Potentials) wurden Zyklen durchgeführt, bei denen die Spannung zwischen 3,5 V und 4,5 V mit einer Durchlaufgeschwindigkeit von 0,2 mV/s geändert wurde. Die Figuren 5 und 6 zeigen zyklische Voltamogramme, die dabei einerseits mit einer nicht erfindungsgemäß optimierten Elektrode und andererseits mit einer erfindungsgemäß optimierten Elektrode gewonnen wurden. Aufgetragen ist die gemessene Stromstärke I in mA gegen die an die Zelle angelegte Spannung u in V gegen die Li/Li⁺-Halbzelle. Dargestellt sind jeweils vier Zyklen, darunter der erste Zyklus Z₁ und der letzte Zyklus Z₄₀.

Bei der Zelle mit der nicht erfindungsgemäß optimierten positiven Elektrode zeigt Figur 5 eine deutliche Veränderung des zyklischen Voltamogramms, die vor allem dadurch charakterisiert ist, dass sich die Position des aniodischen Peaks zu größeren Spannungen verschiebt. Während er bei dem ersten Zyklus noch deutlich unter 4 V liegt, liegt er bei dem vierzigsten Zyklus nahe bei 4,2 V. Dies entspricht einem Anstieg des Innenwiderstandes der Zelle, der nach der Erkenntnis der Erfinder auf die Passivierung der positiven Elektrode zurückzuführen ist.

Die in Figur 6 dargestellten Ergebnisse zeigen, dass die erfindungsgemäße Optimierung der Elektrode dazu führt, dass sich das zyklische Voltamogramm während vierzig Zyklen praktisch nicht ändert: Die elektrischen Werte der Zelle, insbesondere ihr Innenwiderstand, bleiben konstant.

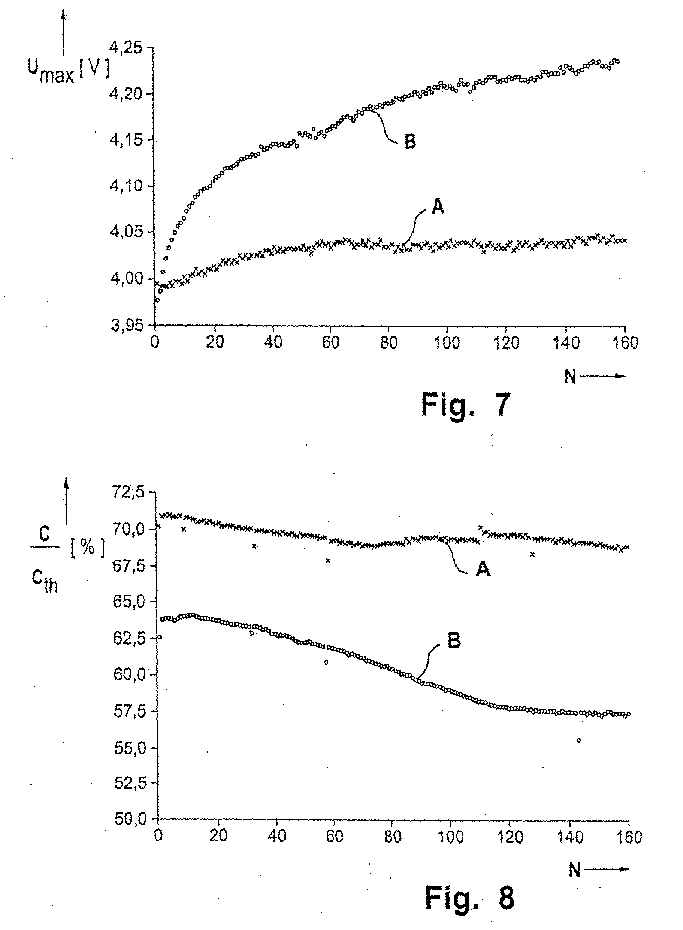

In Figur 7 sind diese Ergebnisse nochmals zusammenfassend dargestellt. Hier ist für Zellen mit erfindungsgemäß optimierter Elektrode (Kurve A) und für Zellen mit nicht optimierter Elektrode (Kurve B) die Änderung des Maximums des Peaks (Uₘₐₓ in Volt) gegen die Zahl der Zyklen dargestellt, wobei in diesem Fall mehr als 150 Zyklen durchgeführt wurden. Auch diese Darstellung zeigt, dass sich ohne die erfindungsgemäße Elektrodenoptimierung die Peaklage und damit der Innenwiderstand der Zelle stetig ändert, während sie bei Verwendung einer erfindungsgemäß optimierten Elektrode nahezu konstant bleibt.

Figur 8 zeigt für eine Zelle mit erfindungsgemäß optimierter Elektrode (Kurve A) und eine Zelle mit nicht optimierter Elektrode (Kurve B) die Abhängigkeit der elektrischen Entladekapazität (in % der theoretischen Kapazität von der Zahl N der Lade- und Entladezyklen). Auch diese Kenngröße wird durch die Erfindung wesentlich verbessert: Einerseits ist die Anfangskapazität um etwa 7% höher, andererseits ist die mit dem wiederholten Laden und Entladen der Zelle verbundene Kapazitätsabnahme wesentlich geringer.

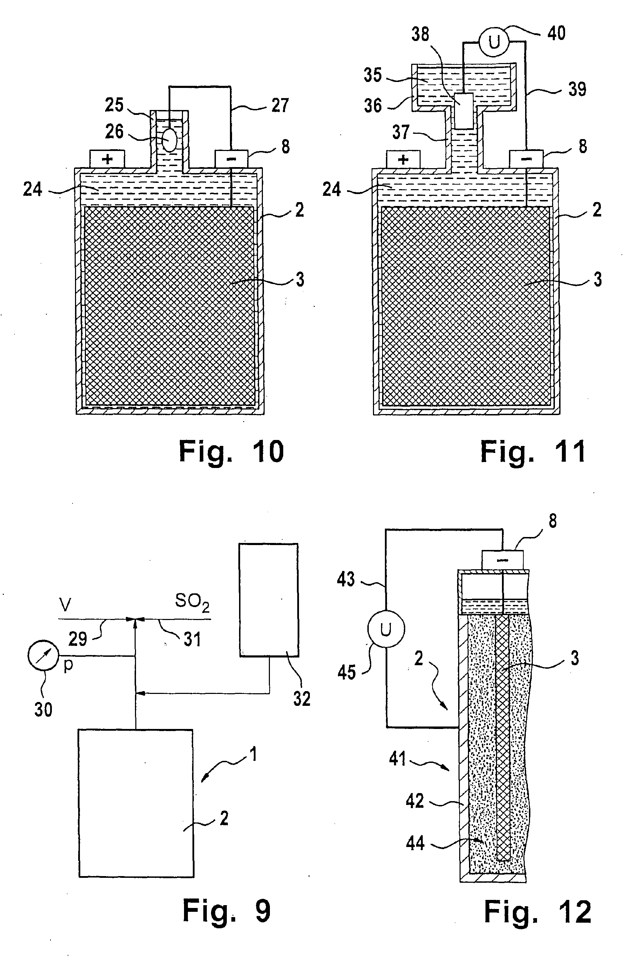

Figur 9 verdeutlicht das Füllen der Zelle mit Elektrolytlösung gemäß dem dritten Hauptaspekt der Erfindung. In dem Gehäuse 2 der Zelle 1 befinden sich zu diesem Zeitpunkt bereits die Elektroden und die poröse Isolatorschicht, wie beispielhaft in Figur 1 dargestellt. Der Füllvorgang läuft wie folgt ab:
- Zunächst wird das Gehäuse 2 der Zelle 1 über die Leitung 29 evakuiert, der Vorgang kann mit einem Druckmessgerät 30 kontrolliert werden. Dann wird über die Leitung 31 gasförmiges SO₂ zugeführt, so dass der Innenraum des Gehäuses 2 mit gasförmigem SO₂ gefüllt wird.
- Danach erfolgt die Füllung mit einer Elektrolytlösung, die in einem Behälter 32 vorrätig gehalten wird. Da sie relativ arm an SO₂ ist, wird das in der Zelle 1 vorhandene gasförmige Schwefeldioxid nach Öffnen der Verbindung zwischen dem Gehäuse 2 und dem Behälter 32 begierig in der Elektrolytlösung gelöst. Mit anderen Worten findet eine schwach exotherme Reaktion mit der Elektrolytlösung statt. Dadurch wird die Gasmenge in dem Gehäuse 2 vermindert. Es entsteht ein Unterdruck in der Zelle 1, durch den weiterer Elektrolyt aus dem Behälter 32 angesaugt wird. Der Elektrolyt dringt dabei in alle Poren der im Inneren der Zelle 1 vorhandenen Schichten ein. Dies wird zusätzlich gefördert, wenn zu diesem Zeitpunkt bereits eine Teilmenge des Leitsalzes in der Zelle (beispielsweise als Ergebnis eines Reinigungsschrittes gemäß dem zweiten Hauptaspekt) vorhanden ist.

Die Figuren 10 bis 12 verdeutlichen den vierten Hauptaspekt der Erfindung. Die Erläuterung erfolgt anhand von Zellen mit Lithium als aktivem Metall, einer negativen Graphit-Insertionselektrode und einer positiven Interkalationselektrode mit einer Elektrodenmasse aus Lithiumkobaldoxid. Sie lassen sich leicht auf den allgemeinen Fall anderer geeigneter aktiver Metalle und Elektrodenmaterialien übertragen.

Figur 10 zeigt eine mit Elektrolyt 24 gefüllte Zelle 2. Die positive Elektrode ist bei der hier gewählten Darstellung nicht zu erkennen, jedoch selbstverständlich vorhanden. Die Zelle 1 hat einen Einfüllstutzen 25, durch den ein Stück Lithiummetall 26 in den Elektrolyt 24 eingetaucht werden kann. Das Lithiummetall 26 ist elektrisch mit dem Minuspol 8 der Batterie, also mit der negativen Elektrode 3, verbunden. Ohne Anlegen einer äußeren Spannung führt diese Anordnung dazu, dass sich das Lithium 26 nach und nach auflöst, während gleichzeitig eine Deckschicht aus Lithiumdithionit auf der negativen Elektrode gebildet wird. Der Batteriestromkreis zwischen der positiven und der negativen Elektrode ist bei diesem Vorgang offen.

Bei dieser Ausführungsform bildet das Lithiummetall 26 gleichzeitig die Hilfselektrode und den Zusatzvorrat des aktiven Metalls. An der negativen Elektrode NE und der Hilfselektrode HE laufen folgende Reaktionen ab:

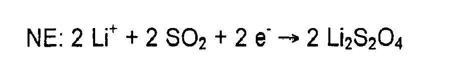

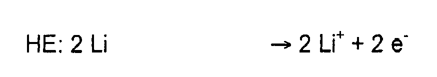

Die bei der Reaktion an der Hilfselektrode frei werdenden Elektronen fließen über die Leitungsverbindung 27 zu der negativen Elektrode 3, wo sie bei der dort ablaufenden Reaktion verbraucht werden. Aufgrund der thermodynamischen Gegebenheiten ist bei dieser Ausführungsform keine Spannungsquelle in der Leitung 27 erforderlich.

Bei der in Figur 10 dargestellten Ausführungsform wird vor dem ersten Laden der Zelle die Deckschicht auf der negativen Elektrode gebildet, ohne dass ein Teil des Lithiums aus der positiven Elektrode verbraucht wird. Der Lithiumgehalt der positiven Elektrode steht deswegen in vollem Umfang für das Laden und das nachfolgende Entladen der Zelle zur Verfügung.

Eine Anordnung ähnlich Figur 10 kann auch verwendet werden, um nach dem ersten Ladevorgang die positive Elektrode wieder zu "regenerieren", indem man den Verlust an aktivem Metall ersetzt, der in der positiven Elektrode infolge der Deckschichtbildung bei einem vorausgehenden Ladevorgang eingetreten ist. In diesem Fall ist die positive Elektrode die Zielelektrode der Lithiumübertragung, d.h. nach dem ersten Laden der Zelle wird die Leitungsverbindung 27 zwischen dem Lithiummetall 26 und der positiven Elektrode hergestellt, während gleichzeitig der Batteriestromkreis zwischen der positiven und der negativen Elektrode offen ist. Dadurch werden Lithiumionen gezielt in die positive Elektrode eingelagert, wobei dort folgende Reaktion abläuft:

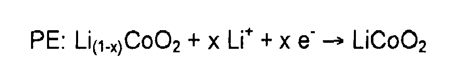

Figur 11 zeigt eine Ausführungsform, bei der eine zusätzliche Menge Elektrolyt 35 als Zusatzvorrat des Lithiums zur Verfügung gestellt wird. Die zusätzliche Menge Elektrolyt befindet sich im dargestellten Fall in einem Behälter 36, der über eine Elektrolytbrücke 37 mit dem Elektrolyt 24 in der Zelle 2 verbunden ist. Eine Hilfselektrode 38 ist über eine Leitungsverbindung 39 mit dem negativen Anschlusskontakt 8 der Zelle und folglich mit der negativen Elektrode 3 verbunden. Durch eine in der Leitungsverbindung 39 liegende Spannungsquelle 40 wird eine (experimentell optimierte) elektrische Spannung zwischen der Hilfselektrode 38 und der negativen Elektrode 3 erzeugt, die dazu führt, dass an den Elektroden folgende Reaktionen ablaufen:

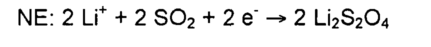

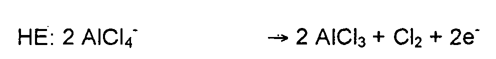

Die Reaktion an der Hilfselektrode liefert über die Leitungsverbindung 39 die Elektronen, die zur Erzeugung der Deckschicht an der negativen Elektrode erforderlich sind. Die erforderlichen Li⁺-Ionen stehen in der zusätzlichen Menge des Elektrolyts (d.h. in dem darin enthaltenen Leitsalz) zur Verfügung.

Auch die in Figur 11 dargestellte Anordnung kann in abgewandelter Weise verwendet werden, um die positive Elektrode nach dem ersten Ladevorgang und dem damit verbundenen Verlust an Lithium zu regenerieren, wobei auch in diesem Fall die Leitungsverbindung zu dem positiven Anschlusskontakt der Zelle hergestellt wird und die Übertragung des Lithiums nach dem ersten Ladevorgang stattfindet.

Figur 12 zeigt eine Ausführungsform, bei der die Hilfselektrode von einer aus Metall bestehenden Wand 42 des Gehäuses 41 der Zelle 2 gebildet wird. Die Leitungsverbindung 43 wird demzufolge zwischen dem Gehäuse 41 und dem negativen Anschlußkontakt 8 hergestellt. Der Zusatzvorrat an Lithium wird in Form von Lithiumdithionit 44 zur Verfügung gestellt, das (beispielsweise als Pulver) so in die Zelle eingefüllt wurde, dass es sich im Zwischenraum zwischen der Innenwand des Gehäuses 41 und der negativen Elektrode 3 befindet. Dadurch haben die Reaktionsprodukte der nachfolgend erläuterten Reaktionen kurze Diffusionswege sowohl zu der Hilfselektrode (Gehäusewand 42) als auch zu der Zielelektrode (hier die negative Elektrode 3).

Getrieben durch die Spannung einer in die Leitungsverbindung 43 geschalteten Spannungsquelle 45 laufen an den Elektroden folgende Reaktionen ab:

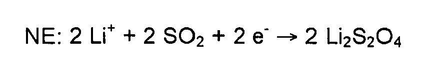

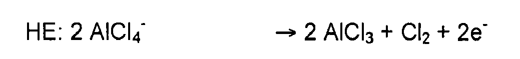

Die Reaktion an der Hilfselektrode (Gehäusewand) hat folgende weitere Reaktionen zur Folge:

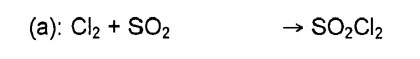

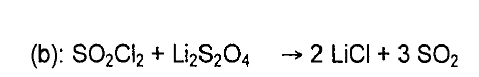

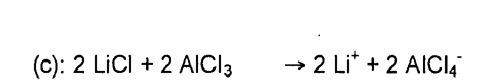

In Reaktion (a) reagiert das an der Hilfselektrode gebildete Chlor mit dem SO₂ aus dem Elektrolyt zu Sulfurylchlorid, das in Reaktion (b) mit dem als Lithium-Zusatzvorrat vorhandenen Lithiumdithionit unter Bildung von Lithiumchlorid und Schwefeldioxid weiterreagiert. Die Reaktion (c) führt - ausgehend von Produkten der Vorreaktionen - zur Bildung von Lithiumionen, die in der Deckschicht-Bildungsreaktion an der negativen Elektrode weiterreagieren.

Auch in diesem Fall kann die positive Elektrode die Zielelektrode sein, wobei analog das gleiche wie bei den vorhergehenden Ausführungsformen gilt.

Bevorzugte Merkmale (Klauseln):
1. Elektrochemische Batteriezelle mit
   einer negativen Elektrode, einem ein Leitsalz enthaltenden Elektrolyt und einer positiven Elektrode,
   wobei
   der Elektrolyt auf SO₂ basiert und
   der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlussreaktionen stattfinden.
2. Batteriezelle nach Klausel 1, bei welcher benachbart und parallel zu der positiven Elektrode eine poröse Isolatorschicht verläuft, die so angeordnet und ausgebildet ist, dass während des Ladens der Zelle an der negativen Elektrode abgeschiedene aktive Masse durch die Poren der Isolatorschicht bis an die Oberfläche der positiven Elektrode hindurchwachsen kann.
3. Batteriezelle nach Klausel 1 oder 2, wobei die negative Elektrode so ausgebildet ist, dass beim Laden der Zelle positive Metallionen des Leitsalzes in ihrem Inneren aufgenommen werden.
4. Batteriezelle nach Klausel 3, wobei die negative Elektrode eine elektrisch leitfähige Elektrodenmasse aufweist, in welche die Metallionen des Leitsalzes beim Laden der Zelle aufgenommen werden und die poröse Isolatorschicht zwischen der elektrisch leitfähigen Elektrodenmasse der negativen Elektrode und der positiven Elektrode verläuft.
5. Batteriezelle nach Klausel 4, bei welcher die elektrisch leitfähige Elektrodenmasse der negativen Elektrode Kohlenstoff enthält.
6. Batteriezelle nach Klausel 2,
   wobei
   die negative Elektrode ein flächiges, elektronisch leitendes Substrat und eine mit dem Substrat verbundene nichtleitende Abscheideschicht aufweist, die derartig ausgebildet und angeordnet ist, dass an der Oberfläche des Substrats abgeschiedene aktive Masse in ihre Poren eindringt und dort weiter abgeschieden wird und
   zwischen der Abscheideschicht und der positiven Elektrode keine für die aktive Masse undurchlässige Sperrschicht vorhanden ist, wobei die poröse Isolatorschicht von der Abscheideschicht gebildet wird oder eine gesonderte Schicht ist.
7. Batteriezelle nach Klausel 2, wobei die poröse Isolatorschicht ein partikel-, faser- oder rohrförmiges Porenstrukturmaterial enthält.
8. Batteriezelle nach Klausel 7, bei welcher das Porenstrukturmaterial ein Oxid, Carbid oder ein chemisch stabiles Silikat enthält.
9. Batteriezelle nach Klausel 2, bei welcher die poröse Isolatorschicht ein Bindemittel auf Basis eines Terpolymers aus Tetrafluorethylen, Hexafluorpropylen und Vinyliden-Fluorid enthält.
10. Verfahren zum Herstellen einer elektrochemischen Batteriezelle, die in einem Gehäuse eine positive Elektrode und eine negative Elektrode aufweist, insbesondere einer Batteriezelle nach einer der vorhergehenden Klauseln,
   bei welchem
   zur Optimierung einer Elektrode Hydroxid-Ionen von deren Oberfläche entfernt werden, wobei
   ein Reinigungsmittel, das eine mit Hydroxid-Ionen reagierende erste Reinigungskomponente enthält, derartig mit der Elektrode in Kontakt gebracht wird, dass an ihr gebundene Hydroxid-Ionen durch Reaktion mit der ersten Reinigungskomponente von der Elektrodenoberfläche gelöst werden, und
   Bestandteile des Reinigungsmittels oder Reaktionsprodukte, die die Funktion der Zelle stören könnten, von der Elektrode entfernt werden.
11. Verfahren nach Klausel 10, bei welchem die erste Reinigungskomponente eine protonenfreie Lewis-Säure ist.
12. Verfahren nach Klausel 11, bei welchem die protonenfreie Lewis-Säure ausgewählt ist aus der Gruppe bestehend aus AlF₃, BF₃, CO₂, CS₂ und GaCl₃.
13. Verfahren nach einer der Klauseln 10 bis 12, bei welchem die Elektrode eine Insertionselektrode, insbesondere eine Interkalationselektrode ist.
14. Verfahren nach Klausel 13, bei welchem ein Reinigungsmittel, das eine mit H⁺-Ionen reagierende zweite Reinigungskomponente enthält, derartig mit der Insertionselektrode in Kontakt gebracht wird, dass in ihr gebundene H⁺-Ionen durch Reaktion mit der Komponente aus der Elektrode extrahiert werden.
15. Verfahren nach einer der Klauseln 10 bis 14, bei welchem die zweite Reinigungskomponente ein Salz ist, das mit H⁺-Ionen, die an der Insertionselektrode gebunden sind, eine Ionenaustauschreaktion eingeht.
16. Verfahren nach Klausel 15, bei welchem das Salz ein Halogenid, insbesondere ein Fluorid eines Alkalimetalls, eines Erdalkalimetalls oder eines Elementes der dritten Hauptgruppe des Periodensystems, insbesondere LiCl oder LiF ist.
17. Insertionselektrode, insbesondere Interkalationselektrode, für eine elektrochemische Batteriezelle, insbesondere für eine Batteriezelle nach einer der Klauseln 1 bis 9, deren Oberfläche im wesentlichen frei von Hydroxid-Ionen ist.
18. Insertionselektrode nach Klausel 17, die im wesentlichen frei von H⁺-Ionen ist.
19. Elektrochemische Batteriezelle, insbesondere nach einer der Klauseln 1 bis 9, enthaltend eine Elektrode nach Klausel 17 oder 18.
20. Verfahren zur Herstellung einer elektrochemischen Batteriezelle, die in einem Gehäuse eine positive Elektrode und eine negative Elektrode aufweist, umfassend einen Verfahrensschritt, bei dem in das Gehäuse eine auf SO₂ basierende Elektrolytlösung mit einem Leitsalz eingefüllt wird, insbesondere nach Klausel 12, wobei das Einfüllen der Elektrolytlösung folgende Teilschritte einschließt:
   - der Innenraum des Gehäuses wird mit gasförmigem SO₂ gefüllt;
   - eine Einfüllöffnung des Gehäuses wird gasdicht an ein Gefäß angeschlossen, das die Elektrolytlösung mit einem Anteil an SO₂ enthält, der so bemessen ist, dass das gasförmige SO₂ in der Elektrolytlösung begierig gelöst wird; und
   - die Elektrolytlösung wird, getrieben durch den aus dem Lösungsvorgang resultierenden Unterdruck, in das Gehäuse einströmen gelassen.
21. Verfahren nach Klausel 20, bei welchem das Leitsalz LiAlCl₄ ist und der SO₂-Anteil der Elektrolytlösung höchstens LiAlCl₄ x 3,5 SO₂ entspricht.
22. Verfahren zur Herstellung einer elektrochemischen Batteriezelle, die in einem Gehäuse eine positive Elektrode und eine negative Elektrode aufweist, umfassend einen Verfahrensschritt, bei dem in das Gehäuse eine auf SO₂ basierende Elektrolytlösung mit einem Leitsalz eingefüllt wird, wobei nach dem Einfüllen der Elektrolytlösung auf der negativen Elektrode eine Deckschicht gebildet wird, die das aktive Metall der Zelle enthält, insbesondere nach einer der Klauseln 10 bis 16 und 20 bis 21,
   bei welchem die Zelle hinsichtlich einer aus der Bildung der Deckschicht resultierenden Minderung ihrer Entladekapazität dadurch optimiert wird, dass für die Bildung der Deckschicht erforderliches aktives Metall aus einem Zusatzvorrat zu einer der Elektroden übertragen wird, wobei
   - der Zusatzvorrat in Kontakt mit der Elektrolytlösung steht,
   - eine Hilfselektrode in elektrisch leitendem Kontakt zu der Elektrolytlösung steht,
   - eine elektrische Leitungsverbindung zwischen der Hilfselektrode und der Elektrode, zu der das aktive Metall übertragen werden soll, hergestellt wird und
   - die Übertragung des aktiven Metalls von dem Zusatzvorrat zu der Elektrode dadurch bewirkt wird, dass ein elektrischer Strom zwischen der Hilfselektrode und der Elektrode, zu der der aktive Metall übertragen wird, fließt.
23. Verfahren nach Klausel 22, bei welchem der Zusatzvorrat metallisches aktives Metall enthält.
24. Verfahren nach Klausel 22, bei welchem der Zusatzvorrat das aktive Metall in einer Verbindung enthält.
25. Verfahren nach Klausel 24 zur Herstellung einer Zelle, deren aktives Metall ein Alkalimetall A ist, bei welchem der Zusatzvorrat ein Dithionit A₂S₂O₄ des Alkalimetalls ist.
26. Verfahren nach Klausel 22, bei welchem der Zusatzvorrat eine zusätzliche Menge des Elektrolyts einschließt.
27. Verfahren nach einer der Klauseln 22 bis 26, bei welchem die Leitungsverbindung zwischen der Elektrode, zu der das aktive Metall übertragen werden soll, und dem Gehäuse derartig hergestellt wird, dass ein elektrisch leitender Teil der Innenwand des Gehäuses die Hilfselektrode bildet.
28. Verfahren nach einer der Klauseln 22 bis 27, bei welchem die Elektrode, zu der das aktive Metall übertragen wird, die negative Elektrode ist und die Übertragung vor dem ersten Laden der Zelle erfolgt.
29. Verfahren nach einer der Klauseln 22 bis 28, bei welchem die Elektrode, zu der das aktive Metall übertragen wird, die positive Elektrode ist,
   die Übertragung erfolgt, nachdem die Zelle erstmals unter Bildung einer das aktive Metall enthaltenden Deckschicht auf der negativen Elektrode zumindest teilweise geladen wurde, und
   durch die Zuführung des aktiven Metalls zu der positiven Elektrode die mit dem vorausgehenden Ladevorgang verbundene Abnahme von deren Gehalt an aktivem Metall zumindest teilweise ausgeglichen wird.
30. Batteriezelle nach Klausel 1 oder 19, oder Verfahren nach einer der Klauseln 10, 20 oder 22, bei welchem das aktive Metall ausgewählt ist aus der Gruppe bestehend aus den Alkalimetallen, den Erdalkalimetallen und den Metallen der zweiten Nebengruppe des Periodensystems.
31. Batteriezelle oder Verfahren nach Klausel 30, dadurch gekennzeichnet, dass das aktive Metall Lithium, Natrium, Calcium, Zink oder Aluminium ist.
32. Batteriezelle nach Klausel 1 oder 19, oder Verfahren nach einer der Klauseln 10, 20 oder 22, bei welchem die positive Elektrode ein Metalloxid enthält.
33. Batteriezelle oder Verfahren nach Klausel 32, bei welchem die positive Elektrode eine Interkalationsverbindung enthält.
34. Batteriezelle oder Verfahren nach Klausel 33, bei welchem die positive Elektrode eine Interkalationsverbindung mit CoO₂ enthält.

## Patentansprüche

1. Elektrochemische Batteriezelle mit
einer negativen Elektrode, einem ein Leitsalz enthaltenden Elektrolyt und einer positiven Elektrode,
wobei
der Elektrolyt auf SO₂ basiert und
der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlußreaktionen stattfinden und
benachbart und parallel zu der positiven Elektrode eine poröse Isolatorschicht verläuft, die so angeordnet und ausgebildet ist, dass während des Ladens der Zelle an der negativen Elektrode abgeschiedene aktive Masse durch die Poren der Isolatorschicht bis an die Oberfläche der positiven Elektrode hindurchwachsen kann.

2. Batteriezelle nach Anspruch 1, wobei die negative Elektrode so ausgebildet ist, dass beim Laden der Zelle positive Metallionen des Leitsalzes in ihrem Inneren aufgenommen werden.

3. Batteriezelle nach Anspruch 2, wobei die negative Elektrode eine elektrisch leitfähige Elektrodenmasse aufweist, in welche die Metallionen des Leitsalzes beim Laden der Zelle aufgenommen werden und die poröse Isolatorschicht zwischen der elektrisch leitfähigen Elektrodenmasse der negativen Elektrode und der positiven Elektrode verläuft.

4. Batteriezelle nach Anspruch 3, wobei die elektrisch leitfähige Elektrodenmasse der negativen Elektrode Kohlenstoff enthält.

5. Batteriezelle nach Anspruch 1,
wobei
die negative Elektrode ein flächiges, elektronisch leitendes Substrat und eine mit dem Substrat verbundene nichtleitende Abscheideschicht aufweist, die derartig ausgebildet und angeordnet ist, dass an der Oberfläche des Substrats abgeschiedene aktive Masse in ihre Poren eindringt und dort weiter abgeschieden wird und
zwischen der Abscheideschicht und der positiven Elektrode keine für die aktive Masse undurchlässige Sperrschicht vorhanden ist, wobei die poröse Isolatorschicht von der Abscheideschicht gebildet wird oder eine gesonderte Schicht ist.

6. Batteriezelle nach Anspruch 1, wobei die poröse Isolatorschicht ein partikel-, faser- oder rohrförmiges Porenstrukturmaterial enthält.

7. Batteriezelle nach Anspruch 6, wobei das Porenstrukturmaterial ein Oxid, Carbid oder ein chemisch stabiles Silikat enthält.

8. Batteriezelle nach Anspruch 1, wobei die poröse Isolatorschicht ein Bindemittel auf Basis eines Terpolymers aus Tetrafluorethylen, Hexafluorpropylen und Vinyliden-Fluorid enthält.

9. Batteriezelle nach Anspruch 1, wobei das aktive Metall ausgewählt ist aus der Gruppe bestehend aus den Alkalimetallen, den Erdalkalimetallen und den Metallen der zweiten Nebengruppe des Periodensystems.

10. Batteriezelle nach Anspruch 9, wobei das aktive Metall Lithium, Natrium, Calcium, Zink oder Aluminium ist.

11. Batteriezelle nach Anspruch 1, wobei die positive Elektrode ein Metalloxid enthält.

12. Batteriezelle nach Anspruch 1, wobei die positive Elektrode eine Interkalationsverbindung enthält.

13. Batteriezelle oder Verfahren nach Anspruch 12, wobei die positive Elektrode eine Interkalationsverbindung mit CoO₂ enthält.
